## Europäisches Patentamt
## European Patent Office
## Office européen des brevets

(19)

(11) Numéro de publication: **0 260 195**
**B1**

(12)

# FASCICULE DE BREVET EUROPEEN

(45) Date de publication du fascicule du brevet:
**10.05.89**

(51) Int. Cl.⁴: **B62D 5/22**

(21) Numéro de dépôt: **87401996.1**

(22) Date de dépôt: **07.09.87**

(54) Direction à crémaillère et à assistance hydraulique pour véhicule automobile.

(30) Priorité: **09.09.86 FR 8612622**

(43) Date de publication de la demande:
**16.03.88 Bulletin 88/11**

(45) Mention de la délivrance du brevet:
**10.05.89 Bulletin 89/19**

(84) Etats contractants désignés:
**DE GB IT**

(56) Documents cités:
**WO-A-81/00239**
**FR-A- 1 341 375**
**FR-A- 2 184 211**
**US-A- 2 955 667**

**RESEARCH DISCLOSURE,**
**novembre 1975, page 6, no. 13906; "Rack and pinion**
**steering gear with fluid power assist"**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Coquillat, Gérard, 48 Boulevard Franklin Roosevelt, F-92500 Reuil-Malmaison(FR)**

(74) Mandataire: **Moncheny, Michel et al, c/o Cabinet Lavoix 2 Place d'Estienne d'Orves, F-75441 Paris Cedex 09(FR)**

## Description

L'invention concerne une direction à crémaillère et à assistance hydraulique pour véhicule automobile.

On connaît des directions pour véhicule automobile comportant une crémaillère associée à un pignon d'entraînement lui-même fixé à l'extrémité de la colonne de direction et à un vérin hydraulique placé sur un côté de la crémaillère et dans son prolongement. Une des parties du vérin (corps ou tige) est fixée de façon articulée à la structure du véhicule et l'autre partie de ce vérin est reliée à une extrémité de la crémaillère.

Un tel dispositif agit comme amortisseur de direction et peut éventuellement assurer l'assistance hydraulique de la direction, mais il faut alors prévoir des moyens d'alimentation du vérin en fluide hydraulique et un dispositif de commande de ces moyens.

Les dispositifs de commande et d'alimentation proposés jusqu'ici sont relativement complexes et encombrants, étant généralement situés sur la colonne de direction, et leur adaptation à un véhicule à direction non assistée impliquant une importante modification de cette colonne et de pièces avoisinantes.

On connaît des directions à assistance hydraulique comportant un vérin auquel est incorporée une vanne ou distributeur d'alimentation du vérin en liquide sous pression. Ces directions sont en général du type à bielle pendante, et le distributeur comporte un tiroir associé à cette bielle et transmettant, entre celle-ci et le vérin, des efforts dont les composantes transversales peuvent introduire des frottements nuisibles au coulissement du tiroir, générateurs d'usure et préjudiciables au bon fonctionnement du distributeur.

On connaît également une direction à crémaillère assistée par un vérin hydraulique placé en parallèle par rapport à la crémaillère et commandé grâce à un ensemble comportant un capteur d'effort associé à une rotule qui relie la crémaillère à une biellette de direction, un calculateur et des moyens de distribution hydrauliques. Un tel dispositif est complexe et d'un fonctionnement délicat et le montage du vérin en parallèle sur la crémaillère engendre des efforts générateurs de frottements et d'usure.

On connaît également une direction à crémaillère et à assistance hydraulique pour véhicule automobile comportant une crémaillère et un pignon d'actionnement associés, un vérin hydraulique disposé dans le prolongement de la crémaillère et comportant une partie fixée à la structure du véhicule et une partie coulissante liée à une extrémité de la crémaillère, une vanne d'alimentation du vérin en liquide sous pression ainsi qu'au moins une biellette de direction reliée à la crémaillère. La vanne est intercalée entre la crémaillère et le vérin et comporte un tiroir relié à l'extrémité de la crémaillère et un corps dans lequel le tiroir est monté coulissant, placé dans le prolongement de la crémaillère et solidaire, d'un côté de la partie coulissante du vérin et, de l'autre côté, d'un palier dans lequel la crémaillère est montée coulissante par sa partie voisine de son extrémité, avec une course faible, limitée par au moins une butée.

Cette direction à assistance hydraulique qui est décrite en particulier dans la revue "Research Disclosure" Novembre 1975, page 6, n° 13906, présente l'inconvénient que le tiroir de la vanne est relié à la crémaillère par des moyens mécaniques relativement rigides qui ne sont pas accessibles de l'extérieur; le réglage de la vanne conditionnant le bon fonctionnement de la direction requiert donc un démontage et des opérations longues et complexes.

Afin d'éviter ces inconvénients, le tiroir de la vanne de la direction suivant l'invention est relié à la crémaillère par l'intermédiaire d'une tige filetée réglable de l'extérieur, dans la direction axiale de la crémaillère et d'une attache élastique.

Afin de bien faire comprendre l'invention, on va maintenant décrire, à titre d'exemple non limitatif, en se référant aux figures jointes en annexe, une mode de réalisation d'une direction à crémaillère à assistance hydraulique suivant l'invention.

La figure 1 est une vue en perspective de la direction et de son dispositif d'assistance hydraulique.

La figure 2 est une vue en coupe longitudinale suivant II–II de la figure 1.

La figure 3 est une vue en coupe transversale suivant III–III de la figure 1.

La figure 4 est une vie d'un détail en coupe suivant IV–IV de la figure 2.

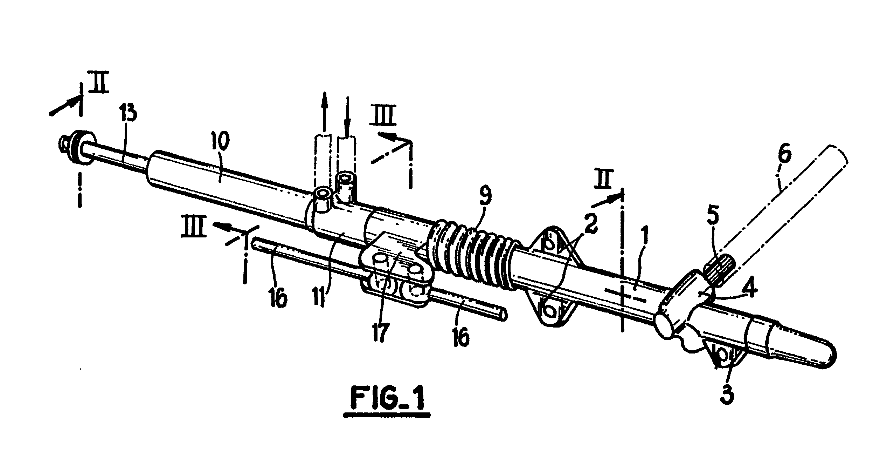

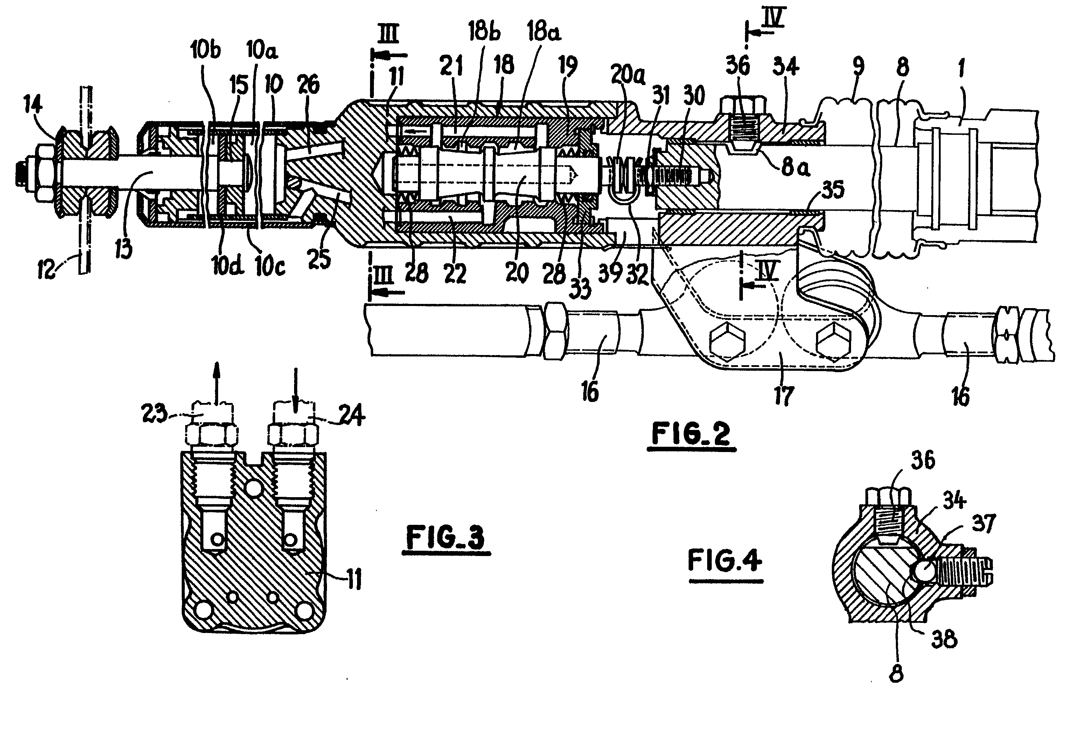

Sur la figure 1, on voit l'ensemble de la direction assistée suivant l'invention comportant, de manière habituelle: un boîtier de crémaillère 1 muni de pattes de fixation 2 et 3 permettant d'assurer sa liaison à la structure du véhicule sur lequel la direction est montée. Une portion 4 du boîtier 1 constitue le logement d'un pignon 5 fixé à l'extrémité de l'arbre de direction 6 et engrènant avec la crémaillère 8 logée dans le boîtier 1 et visible sur la figure 2. L'arbre de direction 6 est solidaire, à son extrémité opposée au pignon d'entraînement de la crémaillère, d'un volant de direction non représenté. L'une des parties d'extrémité de la crémaillère 8 est saillante par rapport au boîtier 1 et protégée par un soufflet de caoutchouc 9.

Le corps d'un vérin 10 prolongé par une tête de vérin 11 est disposé dans le prolongement axial du boîtier 1 et de la crémaillère 8. Le corps de vérin 10 est monté coulissant par rapport à une tige de vérin 13. La tige de vérin 13 est engagée dans le corps de vérin 10 par une de ses extrémités et fixée, à son autre extrémité, sur la structure 12 du véhicule par l'intermédiaire d'un moyen de liaison 14 constitué par un plot de caoutchouc, deux rondelles de serrage et un écrou. La tige 13 porte, à son extrémité engagée dans le corps 10 constituant la chambre du vérin, le piston de vérin 15.

La direction comporte également deux biellettes 16 articulées à l'une de leurs extrémités sur un entraîneur 17 relié à la crémaillère 8 et permettant la manœuvre des roues directrices du véhicule non représentées. L'entraîneur 17 assure une liaison en porte-à-faux entre la crémaillère 8 et les biellettes 16.

Comme il est visible sur la figure 2, le vérin 10 peut être alimenté en fluide hydraulique par l'intermédiaire d'une vanne d'alimentation 18 disposée à l'intérieur de la tête de vérin 11 et intercalée entre le vérin et la crémaillère 8.

La vanne d'alimentation 18 est constituée par un distributeur hydraulique comportant un corps de distributeur 19 et un tiroir d'actionnement 20.

Dans le corps de distributeur 19 sont usinés un canal basse pression 21 et un canal haute pression 22 qui sont en communication avec deux canaux correspondants usinés dans la tête de vérin 11 et en communication avec une conduite basse pression 23 et une conduite haute pression 24 respectivement, raccordées à la tête de vérin 11 (figure 3). La conduite 24 est reliée à une centrale hydraulique permettant de fournir du fluide sous pression à la tête de vérin 11 et à la vanne d'alimentation 18. La conduite 23 est reliée à une bâche de récupération d'huile sous faible pression et permet d'évacuer l'huile du vérin par l'intermédiaire de la vanne 18. Des canaux d'alimentation et d'évacuation d'huile tels que 25 et 26 permettent de relier respectivement aux deux chambres 10a, 10b du vérin, qui est à double effet, deux portions 18a, 18b de la chambre du distributeur 18 ménagée à l'intérieur du corps 19 dans laquelle est monté le tiroir 20. Le corps du vérin 10 est constitué par un tube extérieur 10c et par un tube intérieur 10d coaxiaux et ménageant entre eux un espace annulaire par lequel est assurée l'alimentation d'une 10b des chambres du vérin.

Le tiroir 20 est monté coulissant dans la direction axiale, à l'intérieur de la chambre du distributeur 18 et peut être rappelé dans un sens et dans l'autre par deux ressorts 28 constitués chacun par un empilement de rondelles tronconiques.

Le tiroir 20 est solidaire, à son extrémité dirigée vers la crémaillère 8, d'une tige de liaison 20a de direction axiale. L'extrémité de la crémaillère 8 présente un trou borgne taraudé dans la direction axiale permettant de placer dans une position axiale réglable une tige de liaison filetée 30, dont la position peut être fixée après réglage grâce à un écrou 31. Les tiges de liaison correspondantes 20a du tiroir 20 et 30 de la crémaillère 8 comportent des collerettes d'extrémité en vis-à-vis mises en contact par appui sur chacune d'elles de l'une des deux branches d'une attache élastique 32 en forme d'étrier. On réalise ainsi la liaison du tiroir 20 et de l'extrémité de la crémaillère 8. L'extrémité de la chambre du distributeur 18 dirigée vers la crémaillère 8 est fermée par une plaquette annulaire 33 dans laquelle l'extrémité du tiroir 20 est montée coulissante et étanche.

La tête de vérin 11 est solidaire, à l'une de ses extrémités axiales, du corps de vérin 10 et, à son autre extrémité axiale dirigée vers la crémaillère 8, d'une pièce tubulaire 34 constituant un palier pour la partie d'extrémité de la crémaillère 8. Le corps de distributeur 19 qui est solidaire de la tête de vérin 11 et qui est monté à l'intérieur de celle-ci est donc également solidaire, à l'une de ses extrémités axiales du corps de vérin 10 et, à son autre extrémité axiale, du palier 34 dans lequel est montée l'extrémité de la crémaillère 8. La partie d'extrémité de la crémaillère 8 est lisse et montée coulissante dans le palier 34, grâce à des bagues de glissement 35. La crémaillère 8 comporte dans sa partie d'extrémité une encoche 8a dans laquelle vient s'engager, avec un certain jeu axial, une vis 36 coopérant avec un trou taraudé traversant la paroi de la pièce tubulaire 34. On obtient donc ainsi un montage coulissant de la crémaillère 8 permettant des déplacements axiaux, par rapport à la tête de vérin 11, de cette crémaillère et du tiroir 20 qui lui est relié, lesdits déplacements étant d'une amplitude faible mais suffisante pour l'actionnement du distributeur 18. L'entraîneur 17 fait corps avec le palier 34, et une bille 37 maintenue dans un trou de ce palier (Figure 4) coopère avec une saignée longitudinale 38 de la crémaillère de façon à immobiliser en rotation l'entraîneur tout en autorisant ses légers déplacements axiaux par rapport à la crémaillère.

Lorsqu'on exerce sur le volant du véhicule, un effort pour effectuer un changement de direction, ou pour réagir à une poussée, sur les roues, transversale au véhicule, notamment en virage, il se produit un léger déplacement de la crémaillère 8 et du tiroir 20 par rapport à la tête de vérin 11, avec compression de l'un des ressorts 28 et ouverture du distributeur 18 de façon à alimenter le vérin dans la direction voulue; la poussée hydraulique du vérin, proportionnelle à la compression du ressort 28, donc à l'effort au volant, s'exerce, par réaction sur la tige fixe 13, sur la tête de vérin 11, donc sur l'entraîneur 17 et sur les biellettes 16.

La butée 36 n'entre en contact avec un des bords de l'encoche 8a, en assurant une liaison positive entre la crémaillère et l'entraîneur 17, que si l'un des ressorts 28 est comprimé excessivement, notamment lorsque le système hydraulique est défaillant.

Le palier 34 est percé d'une ouverture 39 permettant d'accèder à l'attache élastique 32 assurant la liaison entre le tiroir 20 et la crémaillère 8 et à l'écrou de réglage 31. On peut ainsi effectuer sans démontage le réglage du distributeur 18.

La direction suivant l'invention présente donc l'avantage, en plus de ceux déjà obtenus avec les directions assistées selon l'art antérieur, de permettre un réglage de la vanne ou distributeur 18 sans démontage et de manière particulièrement simple et rapide.

Le montage coaxial du vérin et de la crémaillère permet, notamment grâce au guidage du corps de vérin 10 par le palier 34 et à la liaison souple entre la crémaillère 8 et le tiroir 20, d'éviter que celui-ci subisse des efforts transversaux nuisibles au bon fonctionnement du distributeur. Le dispositif n'utilise pas de canalisation de liaison pour la commande du vérin et est en conséquence particulièrement fiable.

Enfin, la structure de la direction assistée suivant l'invention permet d'envisager l'adaptation d'une assistance hydraulique sur une direction mécanique non assistée, sans modification importante et en particulier en gardant identique la structure du boîtier de crémaillère.

L'invention s'applique à tout type de véhicule automobile.

**Revendications**

1. Direction à crémaillère et à assistance hydraulique pour véhicule automobile comportant une crémaillère (8) et un pignon d'actionnement associé, un vérin hydraulique (10) disposé dans le prolongement de la crémaillère (8) et comportant une partie (13) fixée à la structure (12) du véhicule et une partie coulissante (10) liée à une extrémité de la crémaillère (8), une vanne d'alimentation (18) du vérin en liquide sous pression ainsi qu'au moins une biellette de direction (16) reliée à la crémaillère (8), la vanne (16) étant intercalée entre la crémaillère (8) et le vérin (10) et comportant un tiroir (20) relié à l'extrémité de la crémaillère (8) et un corps (19) dans lequel le tiroir (20) est monté coulissant, placé dans le prolongement de la crémaillère (8) et solidaire, d'un côté de la partie coulissante (10) du vérin et, de l'autre côté, d'un palier (34) dans lequel la crémaillère (8) est montée coulissante par sa partie voisine de son extrémité, avec une course faible, limitée par au moins une butée (36), caractérisée par le fait que le tiroir (20) est relié à la crémaillère (8) par l'intermédiaire d'une tige filetée (30) réglable de l'extérieur, dans la direction axiale de la crémaillère (8) et d'une attache élastique (32).

2. Direction suivant la revendication 1, caractérisée par le fait que le palier (34) est solidaire d'un entraîneur (17) sur lequel est articulée au moins une biellette de direction (16).

3. Direction suivant l'une quelconque des revendications 1 et 2, caractérisée par le fait que la butée (36) est constituée par l'extrémité d'une pièce filetée vissée dans un trou taraudé ménagé dans le palier (34), engagée avec un certain jeu axial, dans une encoche (8a) prévue sur la surface latérale de la zone d'extrémité de la crémaillère (8).

4. Direction suivant l'une quelconque des revendications 1, 2 et 3, caractérisée par le fait que le palier (34) comporte une ouverture (39) pour accéder à la tige filetée (30) et à l'attache métallique (32), depuis l'extérieur, sans démontage.

5. Direction suivant l'une quelconque des revendications 1, 2, 3 et 4, caractérisée par le fait que le corps (19) de la vanne (18) est montée rigidement solidaire d'une tête de vérin (11) fixée à l'extrémité d'un corps de verin (10) monté coulissant, le palier (34) étant solidaire de l'extrémité de la tête de vérin (11) opposée au corps (10).

6. Direction suivant l'une quelconque des revendications 1 à 5, caractérisée par le fait qu'est prévu entre la crémaillère (8) et le palier (34) un moyen (37, 38) assurant leur solidarisation en rotation et autorisant leur coulissement relatif axial.

**Claims**

1. Rack and pinion hydraulically assisted steering for automative vehicles, comprising a rack (8) and an associated actuating pinion, a hydraulic jack (10) arranged as an extension of the rack (8) and comprising a part (13) fixed to the structure (12) of the vehicle and a sliding part (10) connected to one end of the rack (8), a valve (18) for supplying the jack with pressurised liquid and at least one steering rod (16) connected to the rack (8), the valve (8) being interposed between the rack (8) and the jack (10) and comprising a slide nember (20) connected to the end of the rack (8) and a body (19) in which the slide member (20) is slidingly mounted, disposed as an extension of the rack (8) and fixedly connected to one side with the sliding portion (10) of the jack and to the other side with a bearing (34) in which rack (8) is slidingly mounted by a portion close to its end, with little travel, limited by at least one abutment (36), characterised in that the slide member (20) is connected to the rack (8) via a threaded rod (30) which can be regulated from outside, in the axial direction of the rack (8), and a resilient tie (32).

2. Steering according to claim 1, characterised in that the bearing (34) is fixedly connected with a drive member (17) on which at least one steering rod (16) is articulated.

3. Sterring according to claim 1 or 2, characterised in that the abutment (36) comprises the end of a threaded member screwed into a tapped hole formed in the bearing (34), said threaded member engaging with a certain axial play in a notch (8a) provided on the lateral surface of the end zone of the rack (8).

4. Steering according to any one of claims 1, 2 and 3, characterised in that the bearing (34) has an opening (39) for providing access to the threaded rod (30) and to the metal tie (32) from outside without dismantling.

5. Steering according to any one of claims 1, 2, 3 and 4, characterised in that the body (19) of the valve (18) is mounted to be rigidly connected with a jack head (11) fixedly connected to the end of a slidably mounted jack body (10), the bearing (34) being fixedly connected with the end of the jack head (11) opposite to the body (10).

6. Steering according to any one of claims 1 to 5, characterised in that there is provided, between the rack (8) and the bearing (34), means (37, 38) ensuring that they are fixedly connected in rotation and permitting their relative axial sliding.

**Patentansprüche**

1. Hydraulische Zahnstangenservolenkung für Kraftfahrzeuge mit einer Zahnstange (8) und einem zugehörigen Betätigungsritzel, einem hydraulischen Stelltrieb (10), der in der Verlängerung der Zahnstange (8) angeordnet ist und einen Bereich (13), der an dem Fahrzeugaufbau (12) befestigt ist, und einen gleitbeweglichen Bereich (10) aufweist, der mit einem Ende der Zahnstange (8) verbunden ist, mit einem Zuführschieber oder -ventil (18) des Stelltriebs, der mit Flüssigkeit unter Druck versorgt wird, sowie mit wenigstens einem Richtungsschwingarm (16), der mit der Zahnstange (8) verbunden ist, wobei das Ventil (18) zwischen der Zahnstange (8) und dem Stelltrieb (10) angeordnet ist und einen Schieber (20), der mit dem Ende der Zahnstange (8) verbunden ist, und einen Körper (19) aufweist in dem der Schieber (20) gleitbeweglich angeordnet ist, der in der Verlängerung der Zahnstange (8) angeordnet und auf einer Seite mit dem gleitbeweglichen Bereich (10) des Stelltriebs und auf der anderen Seite mit einem Lager (34) verbunden ist, in dem die Zahnstange (8) gleitbeweglich mit ihrem Bereich in der Nähe ihres Endes mit einem geringen Freilauf angeordnet ist, der durch wenigstens einen Anschlag (36) begrenzt ist, dadurch gekennzeichnet, daß der Schieber (20) mit der Zahnstange (8) mittels einer Schraubenspindel (30), die von außen in Axialrichtung der Zahnstange (8) einstellbar ist und einer elastischen Befestigung (32) verbunden ist.

2. Lenkung nach Anspruch 1 dadurch gekennzeichnet, daß das Lager (34) mit einem Mitnehmer (17) verbunden ist, auf dem ein Richtungsschwingarm (16) gedreht wird.

3. Lenkung nach Anspruch 1 oder 2, dadurch gekennzeichnet, daß der Anschlag (36) durch das Ende eines in einem in dem Lager (34) ausgebildeten Gewindeloch eingeschraubten Gewindestücks gebildet ist, das mit einem gewissen Spiel in eine Kerbe (8a) eingreift, die in der seitlichen Oberfläche der Endzone der Zahnstange (8) ausgebildet ist.

4. Lenkung nach einem der Ansprüche 1, 2 oder 3, dadurch gekennzeichnet, daß das Lager (34) eine Öffnung (39) aufweist, zum Erreichen der Schraubenspindel (30) und der metallischen Befestigung (32) von außen ohne Demontage.

5. Lenkung nach einem der Ansprüche 1, 2, 3 oder 4, dadurch gekennzeichnet, daß der Körper (19) des Schiebers (18) auf steife Weise mit einem Stelltriebkopf (11) verbunden angeordnet ist, der an dem Ende eines Stelltriebkörpers (10) befestigt ist, der gleitbeweglich gelagert ist, wobei das Lager (34) mit dem Ende des Stelltriebkopfes (11) gegenüber dem Körper (10) verbunden ist.

6. Lenkung nach einem der Ansprüche 1 bis 5, dadurch gekennzeichnet, daß zwischen der Zahnstange (8) und dem Lager (34) eine Einrichtung (37, 38) vorgesehen ist, die deren gemeinsame Drehung sicherstellt und deren Gleiten relativ zueinander ermöglicht.

**FIG_1**

FIG.2

FIG.4

FIG_3